# EUROPÄISCHE PATENTSCHRIFT

(11) **EP 1 316 051 B1**
(45) Veröffentlichungstag und Bekanntmachung des Hinweises auf die Patenterteilung: **21.04.2004**
(21) Anmeldenummer: 01967063.7
(22) Anmeldetag: 04.09.2001
(51) Int. Cl.: G06F 19/00

(54) **VERFAHREN ZUR VERÄNDERUNG DER KONSTRUKTION EINES BAUTEILS**
METHOD FOR MODIFYING THE DESIGN OF A STRUCTURAL PART
PROCEDE DE MODIFICATION DE LA CONCEPTION D'UN COMPOSANT

(30) Priorität: 05.09.2000 DE 10043737; 05.09.2000 EP 00119201; 06.09.2000 DE 10044036
(43) Veröffentlichungstag der Anmeldung: 04.06.2003
(73) Patentinhaber: MTU Aero Engines GmbH, 80995 München (DE)
(72) Erfinder: BARNER, Johannes, 80637 München (DE); SUBEL, Carsten, 80796 München (DE)
(74) Vertreter: Lindner-Vogt, Karin, Dipl.-Phys.
(86) Internationale Anmeldenummer: PCT/DE2001/003350
(87) Internationale Veröffentlichungsnummer: WO 2002/023457

(56) Entgegenhaltungen:
- EP-A- 0 241 071
- EP-A- 0 280 968
- GB-A- 2 190 268
- US-A- 4 618 924
- US-A- 4 821 214
- US-A- 5 644 688
- FARHAD ARBAB: "SET MODELS AND BOOLEAN OPERATIONS FOR SOLIDS AND ASSEMBLIES" IEEE COMPUTER GRAPHICS AND APPLICATIONS, IEEE INC. NEW YORK, US, Bd. 10, Nr. 6, 1. November 1990 (1990-11-01), Seiten 76-86, XP000179794 ISSN: 0272-1716

## Beschreibung

Die Erfindung betrifft ein Verfahren zur Veränderung, insbesondere zur Optimierung der Konstruktion eines Bauteils unter einem oder mehreren Kriterien anhand eines virtuellen Modells des Bauteils.

Die heutigen Entwicklungsprozesse entwickeln sich von der schrittweisen Entwicklung hin zu gleichzeitiger Entwicklung, wobei die Entwicklungs- und Analysefachrichtungen enger zusammenarbeiten und Wissen aller relevanten Fachrichtungen in frühen Phasen der Produktentwicklung eingebracht wird. Gleichzeitige Entwicklung wird für notwendig befunden, um Produkte mit verbesserter Technologie und höherer Qualität in kürzerer Entwicklungszeit zu entwickeln, was auch zu reduzierten Kosten führt.

Die Wahrscheinlichkeit der Entwicklung besserer und billigerer Bauteile wächst grundsätzlich durch die Anwendung von Hochleistungs-Analysewerkzeugen und dem Wissen von Experten auf den unterschiedlichen Gebieten der Ingenieurwissenschaften. Ein mögliches Hindernis zum Erfolg ist indessen die normalerweise beschränkte Zeit, in der die Bauteile entwickelt werden müssen.

In Anbetracht dessen wird die multidisziplinäre Konstrüktionsoptimierung (multidisciplinary design optimization - MDO) als wirksame Methode zur Qualitäts- und Leistungsverbesserung der Produkte bei gleichzeitiger Kostenreduzierung betrachtet. Dies geschieht hauptsächlich durch Verkürzung der insgesamt erforderlichen Auswertezeit für einen Konstruktionszyklus und durch Schaffung eines automatisierten Analysewerkzeugs, das die beste Lösung sucht oder spezifische Aufgaben in begrenzter Zeit erfüllt.

Verschiedene Publikationen geben einen guten Überblick über den Stand der Technik der multidisziplinären Konstruktionsoptimierung. Um nur einige zu nennen, handelt es sich um die Artikel von Alexandrov edit. [Natalia Alexandrov and M.Y. Hussaini, editors, *Multidisciplinary Design Optimization - State of the Art,* SIAM, 1997], Bartholomew [Peter Bartholomew, The role of MDO within aerospace design and progress towards an MDO capability; in *7*^{*th*} *AIAA*/*USAF*/*NASA*/*ISSMO Symposium on Multidisciplinary Analysis and Optimization,* p. 2157-2165; AIAAA, 1998], Kroo [Ilan Kroo; Mdo for large-scale design; in Natalia M. Alexandrov an M.Y. Hussaini, editors, *Multidisciplinary Design Optimization - State of the Art,* pages 22-44; SIAM, 1997]. Sobieski und Haftka [Jaroslaw Sobieszczanski-Sobieski and Raphael T. Haftka; Multidisciplinary aerospace design optimization: Suvey of recent developments. Conference Paper 96-0711, AIAA, 1996. Presented at the 34^{th} Aerospace Sciences Meeting and Exhibit; January 15-18, 1996] und Vanderplaats [G. N. Vanderplaats; Structural design optimization status and direction; *Journal of Aircraft,* 36(1):11-20, January-February 1999].

Sobieski und Haftka unterscheiden drei Kategorien von multidisziplinärer Konstruktionsoptimierung, die unterschiedliche Anforderungen an EDV und Organisation stellen.
- Die erste Kategorie umfaßt nur ein paar Fachrichtungen. Ein Experte kann alle notwendigen Informationen und alles notwendige Wissen verarbeiten.
- Die zweite Kategorie umfaßt alle Methoden, die die multidisziplinäre Aufgabe lösen, wobei alle erforderlichen Fachrichtungen auf einem niedrigen Komplexitätsgrad eingebracht werden. Diese Optimierungsmethode wird meist auf das Konstruktionskonzept eines Systems angewendet, wobei die Analysewerkzeuge als Einzelmodule eingesetzt werden. Werden diese Methoden auf Aufgaben des fortlaufenden Konstruktionsprozesses angewendet, werden sie mit einigen der organisatorischen Herausforderungen konfrontiert, die die multidisziplinäre Konstruktionsoptimierung stellt.
- Die dritte Kategorie wird beschrieben als eine Stufe der computermäßigen und organisatorischen Herausforderung. Um die Analyse in einer modularen Umgebung zu ermöglichen werden bestimmte Techniken, wie z.B. Zerlegung, Annäherung und übergreifende Fühlertechniken als Werkzeuge gebraucht, um die Module selbst und den Datenaustausch zu organisieren.

Ähnliche Einteilungen werden in anderen Veröffentlichungen, z.B. bei Bartholomew und Kroo, vorgestellt. Sie unterscheiden die verschiedenen Komplexitäts- und Genauigkeitsgrade der angewandten Analyseprogramme und der Optimierungsarchitektur.

Die vorstehend beschriebenen Veröffentlichungen führen hin zu einer modularen Analyseumgebung, wofür Zerlegungs- und Annäherungstechniken verwendet werden müssen, um komplexere Konstruktionsaufgaben lösen zu können. Kroo erklärt die Notwendigkeit, die parametrisierte Geometrie auf unterschiedlichen Detaillierungs- oder Abstraktionsgraden zu entwickeln, um die multidisziplinäre Optimierung auf realistische, großmaßstäbliche Konstruktionsaufgaben anwenden zu können, die viele Disziplinen und Analysewerkzeuge aus dem Stand der Technik umfassen.

Um eine vollautomatisierte Konstruktionsoptimierung unter Verwendung einer parametrisierten Geometrie in unterschiedlichen Detaillierungsgraden zu ermöglichen, muß die Geometriemodellierung stärker an die Rasterung angebunden werden. Samareh [Jamshid A. Samareh; Status and future of geometry modeling and grid generation for design and optimization; *Journal of Aircraft,* 36(1):97-104, January-February 1999] stellt eine Übersicht über die zu erfüllenden Anforderungen und die zu lösenden Probleme zusammen, um solch ein vollautomatisiertes Geometriemodell und eine Rasterungsmethode für multidisziplinäre Optimierungsanwendungen zu schaffen.

Ein anderer Aspekt der multidisziplinären Konstruktionsoptimierung wird von Wood und Bauer in diskutiert [Richard M. Wood and Steven X.S. Bauer; A discussion of knowledge based design; Conference Paper 98-4944, AIAA, 1998; Presented at the 7^{th} AIAA/USAF/NASA/ISSMO Symposium on Multidisciplinary Analysis and Optimization; September 2-4, 1998]. Wood und Bauer stellen die Notwendigkeit heraus, Expertenwissen in den Optimierungsprozeß einfließen zu lassen, um die Technologie und Qualität der Produkte zu verbessern. Wissen aus vorhergehenden Konstruktionszyklen müsse in die frühe Phase des Konstruktionsprozesses einfließen.

Keine der aus dem Stand der Technik bekannten Lösungen erlaubt eine vollständig automatisierte Konstruktionsoptimierung.

Es ist Aufgabe der vorliegenden Erfindung, ein vollständig automatisiertes Verfahren zur multidisziplinären Konstruktionsoptimierung eines zwei-, quasi-drei- oder dreidimensionalen Bauteils vorzuschlagen, das eine Übertragung von Änderungen im kleinen Maßstab auf das vollständige Bauteil ermöglicht

Erfindungsgemäß wird ein Verfahren mit den Merkmalen des Anspruchs 1 vorgeschlagen.

Mit dem erfindungsgemäßen Verfahren kann ein Bauteil verändert, insbesondere optimiert werden, indem Veränderungen auf unterschiedliche Detaillierungsstufen des Bauteils angewendet werden. Zunächst wird ein virtuelles Modell des Bauteils geschaffen. Dafür wird das Bauteil aus Grundobjekten mit Boole'schen Operatoren des Solid-Modelings kombiniert, wobei die Grundobjekte insbesondere Flächen oder rotationssymmetrische Körper sind. Jedem der Grundobjekte wird ein Informationselement zugeordnet, in dem die Attribute des jeweiligen Grundobjekts, insbesondere Parameterwerte, Intervallgrenzen und Regeln, abgelegt sind. Diese Attribute bestimmen und beschränken das jeweilige Grundobjekt.

Hierdurch ist möglich geworden, Geometrien bzw. Grundobjekte, denen Wissen bzw. Informationen zugewiesen werden, der multidisziplinären Konstruktionsoptimierung zugänglich zu machen.

Jedes Grundobjekt wird dann aus weiteren Grundobjekten oder einem oder mehreren primitiven Objekten aufgebaut, die mit Boole'schen Operatoren kombiniert werden. Die primitiven Objekte sind in Raster zerlegbare Flächen oder Körper unterschiedlicher Komplexität und geometrischer Vielfalt. Jedem weiteren Grundobjekt oder primitiven Objekt kann wieder ein Informationselement zugeordnet werden, in dem die Attribute des weiteren Grundobjekts oder des primitiven Objekts, insbesondere Parameterwerte, Intervallgrenzen und Regeln, abgelegt werden. Diese Attribute bestimmen und beschränken das jeweilige primitive Objekt.

Durch die Boole'sche Kombination des Bauteils aus einzelnen Grundobjekten ergeben sich geometrische Berührungsflächen oder Berührungslinien zwischen zwei oder mehreren Objekten. Gleiches gilt auch für die primitiven Objekte. Jeder dieser geometrischen Berührungsflächen und -linien wird ein Verbindungselement zugeordnet, in dem Informationen zur Koordinierung der Objekte abgelegt werden.

Diese sog. Verbindungs- oder Koordinierungselemente können auch als zusätzliches Wissen jedem Grundobjekt oder primitiven Objekt zugewiesen werden, um im weiteren Verfahren eine bessere Unterteilung in rasterbare Flächen zu erhalten.

Die primitiven Objekte werden im nächsten Schritt gerastert, und zwar durch ein herkömmliches Gitterverfahren.

Anschließend kann die Veränderung des Bauteils vorgenommen werden. Dies geschieht durch eine Veränderung einzelner oder einer Gruppe von Objekten, wobei die Informationen der Informationselemente die Grenzen möglicher Veränderungen definieren, wobei die Verbindungselemente die Koordinierung der Objekte definieren. Dabei werden übliche Rastertechniken angewendet.

Das vorgeschlagene Modell ist ein merkmalsbasiertes Geometriemodell, das multidisziplinäre Optimierung in unterschiedlichen Detailgraden ermöglicht. Es verwendet einen objektorientierten Zugang um die Geometrie zu erstellen und alle während des Konstruktionsprozesses benötigten Informationen zu integrieren. Die Geometrie auf unterschiedlichen Detailgraden ermöglicht den Beginn mit einer zweidimiensionalen Geometrie, dann mit rotationssymmetrischen oder gedehnten Körpern und schließlich mit einer realistischen, dreidimensionalen Geometrie.

Vorteilhafte Ausgestaltungen des erfindungsgemäßen Verfahrens werden in den Unteransprüchen beschrieben.

Die Grundobjekte können aus einem oder mehreren weiteren Grundobjekten oder primitiven Objekten aufgebaut werden, die durch Boole'sche Operatoren kombiniert werden. Jedem Grundobjekt wird dabei wiederum ein Informationselement zugeordnet, in dem Attribute des Grundobjekts, insbesondere Parameterwerte, Intervallgrenzen und Regeln, abgelegt sind. Jede geometrische Berührungsfläche oder -linie, die bei der Boole'schen Operation zwischen zwei oder mehreren Objekten entsteht, wird ein Verbindungselement zugeordnet, in dem Informationen zur Koordinierung der Objekte abgelegt werden.

Auch die primitiven Objekte können aus einem oder mehreren weiteren primitiven Objekten aufgebaut werden, wodurch der Detaillierungsgrad bzw. der Aufbaugrad des Modells verändert werden kann. Die primitiven Objekte können wiederum durch Boole'sche Operatoren kombiniert werden. Es kann ihnen jeweils ein Informationselement zugeordnet werden, in dem Attribute des primitiven Objekts, insbesondere Parameterwerte, Intervallgrenzen und Regeln, abgelegt sind. Jeder geometrischen Berührungsfläche oder -linie, die bei der Boole'schen Operation zwischen zwei oder mehreren Objekten entsteht, kann ein Verbindungselement zugeordnet werden, in dem Informationen zur Koordinierung der Objekte abgelegt werden

Vorzugsweise erfolgt die Veränderung der geometrischen Gestalt ausschließlich oder überwiegend auf der niedrigsten Objektebene, d.h. den primitiven Objekten, wobei die zu verändernden Objekte rasterbar sind.

Das erfindungsgemäß vorgeschlagene Verfahren erlaubt die multidisziplinäre Optimierung eines Bauteils durch Veränderung des Detaillierungsgrades. Jede Fachrichtung kann mit der Optimierung auf der für sie optimalen Stufe anfangen. Die Details der Konstruktion können während des Optimierungsprozesses geändert werden ohne eine vollständige Änderung der Struktur und Topologie der zuvor konstruierten Geometrie zu erfordern.

Alle in späteren Konstruktionsschritten erforderlichen Informationen können aus den den Einzelobjekten zugeordneten Informationselementen entnommen oder aus den Informationen hergeleitet werden. Die enthaltenen Informationen können verwertet oder an andere Werkzeuge weitergeleitet werden.

Das erfindungsgemäße Veränderungsverfahren wird vorzugsweise zur Optimierung eines Bauteils angewendet. Es kommt bevorzugt nach Abschluß der Grundkonzeption mit geringer Detailliertheit zum Einsatz und vergrößert die Detailvielfalt und die Komplexität der Topologie während des fortschreitenden Prozesses.

Der Grad der Detailliertheit der Geometrie des Modells kann verändert werden durch Änderung des Typs der primitiven Objekte, durch Hinzufügung weiterer Objekte zum vorhergehenden Modell, d.h. letzteres wird aus weiteren Grundobjekten und/oder primitiven Objekten aufgebaut.

Ein Merkmal des Bauteils kann durch Verknüpfung eines primitiven Objekts mit einem Informationselement dargestellt werden, das Attribute des Objekts enthält. Dies können insbesondere Parameterwerte, Intervallgrenzen oder Regeln sein. Die Regel spiegeln das Wissen eines Fachmanns auf den jeweiligen Gebieten wider. Somit kann ein Merkmal des Bauteils ist also als geometrisches Objekt definiert werden, das alle spezifischen Informationen enthält, die benötigt werden, um die Geometrie zu bestimmen und zu begrenzen.

Aus den im Informationselement abgelegten Informationen können auch weitere Informationen und Regeln hergeleitet werden, die in späteren Konstruktionsphasen benötigt werden.

Um eine automatisierte Geometriemodellierung und Rasterung möglich zu machen, ist es wünschenswert, die Hauptmerkmale jedes primitiven Objekts während der Zusammensetzung der Topologie des Gesamtbauteils aufrecht zu erhalten. Hierfür wird die Modelliertechnik erweitert durch die Schaffung zusätzlicher Kurven oder Flächen an den Stellen, an denen Objekte miteinander verbunden oder voneinander getrennt werden.

Diese zusätzlichen Kurven oder Flächen werden Verbindungselemente genannt. Die Verbindungselemente werden benutzt, um die Geometrie, die aus rasterbaren Bestandteilen aufgebaut ist, in diese rasterbaren Bestandteile zu zerlegen. Diese Elemente können sowohl bei der Modellbildung mit Boole'schen Operatoren automatisch erzeugt werden als auch als zusätzliches Wissen jedem Objekt zugewiesen werden. Für die rasterbaren primitiven Objekte kann dann leicht ein Raster erstellt werden.

Durch Boole'sche Operatoren wird ein Objekt erzeugt, das zwei oder mehr primitive Objekte und ein oder mehr Verbindungselemente zwischen den primitiven Objekten umfaßt. Welche Art Objekt für die primitiven Objekte gewählt wird, hängt vom Detaillierungsgrad ab. Mit jeder weiteren Kombination von Objekten wird der Zusammensetzungsgrad und damit der Detaillierungsgrad erhöht.

Jedes Verbindungselement enthält Kurven oder Flächen, die die primitiven Objekte so beschneiden, daß sie nicht überlappen sondern sich genau entlang dieser Kurve oder Fläche treffen. Durch Verwendung dieser Technik kann die Topologie jedes primitiven Objekts während des Optimierungsprozesses im wesentlichen gleich bleiben. Die Erzeugung der Verbindungselemente korrespondiert mit den üblichen Rastermethoden, bei denen spezifische Verbindungsbedingungen für jedes Objekt bestimmt werden.

In einer anderen Ausprägung des erfindungsgemäßen Verfahrens können die Boole'schen Operationen kombiniert werden mit einer optionalen Erzeugung von Schnittmengen benachbarter Objekte, die in das Verbindungselement eingebracht werden. Diese Schnittmengen werden am Schnitt der beiden Objekte geschaffen. Die Verbindungselemente enthalten dann Informationen über mögliche Verbindungsflächen oder -linien zwischen benachbarten Objekten. für die Rasterung können die Verbindungselemente dann so positioniert werden, daß sie die Regeln der Rastererzeugung bestmöglich treffen.

Die primitiven Objekte sind vorzugsweise standardisierte, rasterbare Teile, wie Dreiecke, Rechtecke, Fünfecke, Tetraeder, Pentaeder oder Hexaeder.

Die primitiven Objekte werden vorzugsweise erstellt aus Flächen oder Körpern, die niedrigere geometrische Objekte nutzen, und die mit Boole'schen Operatoren kombiniert oder durch Rotation, Heften oder Dehnen erstellt werden. Primitive Objekte auf dem niedrigsten Detaillierungsgrad sind Objekte wie kreisförmige oder rechteckige Flächen oder Körper. Der Detaillierungsgrad wächst durch die Verwendung von Objekten wie b-Spline-Kurven oder -Oberflächen, um die Umrisse oder Flächen zu beschreiben. Der Detaillierungsgrad ist durch den Grad der geometrischen Vielfalt gekennzeichnet. Wenn die Anzahl der Parameter steigt, werden die Objekte allgemeiner, und die Vielfalt von geometrischen Formen steigt.

Die resultierenden primitiven Objekte sind vorzugsweise standardisiert. Sie haben dieselben Eingangs- und Ausgangsparameter um einen einfacheren Austausch zwischen primitiven Objekten auf verschiedenen Detaillierungsgraden zu ermöglichen.

Durch die Zusammensetzung von rasterbaren primitiven Objekten und Einfügung der Verbindungselemente wird eine automatisierte Rastererstellung möglich. Die Erstellung der Verbindungselemente greift auf Erkenntnisse aus der Zerlegung einer Geometrie nach der Finite-Elemente-Methode zurück.

Der eigentlichen Rasterung durch einen kommerziell erhältlichen Rastergenerator kann ein Vorbereitungsschritt vorangestellt sein, der die Daten, die vom Rastergenerator benötigt werden, zur Verfügung stellt.

Im Vorbereitungsschritt können geometrische Informationen, wie z.B. Scheitelpunkte, Ecken, Flächen, Körper, und spezifische Rasterinformationen, wie z.B. die Anzahl von Elementen, der Typ der Elemente, die Anzahl von Knoten, zur Verfügung gestellt werden. Bei der vorzugsweise eingesetzten Methode der Rasterung wird die vollständige Geometrie an den Verbindungselementen zerlegt.

Das Ergebnis sind einzelne Flächen für die Erstellung eines zweidimensionalen Rasters oder einzelne Körper für die Erstellung eines dreidimensionalen Rasters.

Vorteil der Verbindung von Geometriemodellierung und Rastererstellung in einem System ist der hohe Genauigkeitsgrad in der Geometrie, der dann übertragen wird zu einem kommerziell erhältlichen Rastergenerator. Prozesse wie die Verbindung von Kanten, die sich an ihren Endpunkten aneinander anschließen, das Herausfiltern von Ecken, die kürzer sind als eine vorgegebene Toleranz, oder das Schließen von Lücken zwischen Kanten, können unter Verwendung der Informationen aus dem Geometriemodell durchgeführt werden.

Boole'sche Operationen, die während des Erstellens des Geometriemodells angewendet werden, können eine Änderung der Umrisse der ursprünglichen primitiven Objekte herbeiführen. Die Umrißkanten können gekürzt oder neue Kanten hinzugefügt werden. Deshalb ist die Erkennung, welche Kanten verbunden werden können, implementiert. Durch diese Erkennung können sowohl die Rasterfläche oder der Rasterkörper als auch die Kanten oder Flächen herausgefiltert werden, die zu den Seiten eines Elements gehören.

Zusätzlich zu diesem Erkennungsprozeß können andere Operationen, wie z.B. Filtern und Schließen von Kanten, durchgeführt werden. Aus den erkannten Objekten können alle Informationen hergeleitet werden, die für die kommerzielle Rastergenerierung gebraucht werden.

Zusätzliche Informationen, die für die Rastererstellung relevant sind, können in das Modul eingegeben werden oder werden während der Rastererstellung bestimmt.

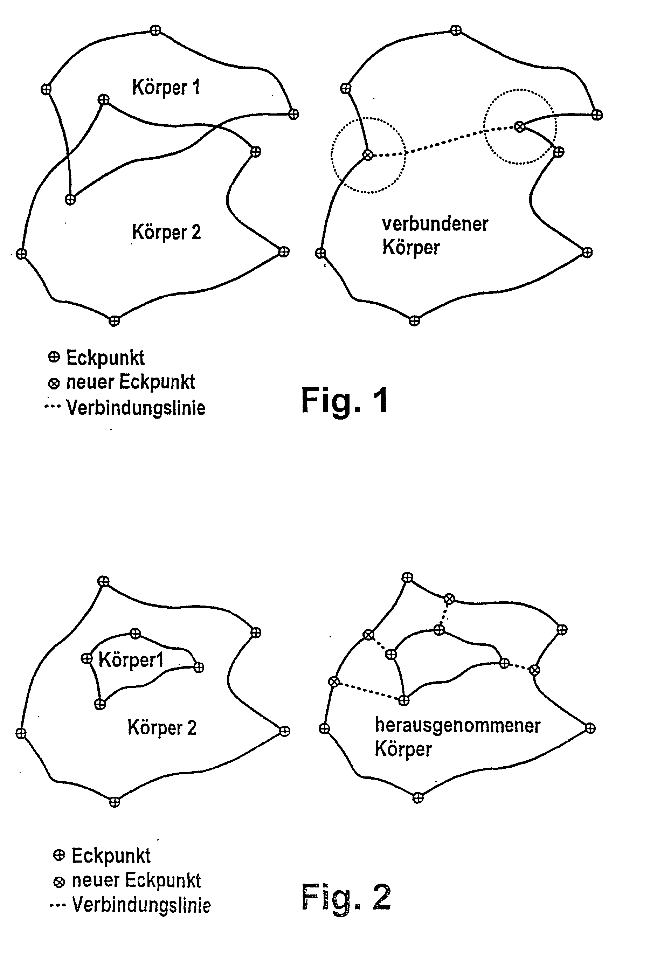

Im Folgenden wird die Erzeugung von Verbindungskurven zwischen zwei Objekten anhand der **Figs. 1 bis 3** näher erläutert:
Die **Figs. 1 bis 3** zeigen die Erzeugung von Verbindungskurven für Flächen. Die Methodik ist dieselbe für Körper, außer daß Kurven anstelle von Punkten und

Flächen anstelle von Kurven verwendet werden, um die Verbindungsflächen zu erzeugen.

**Fig. 1** zeigt die Erzeugung einer Verbindungskurve zwischen zwei Flächen.

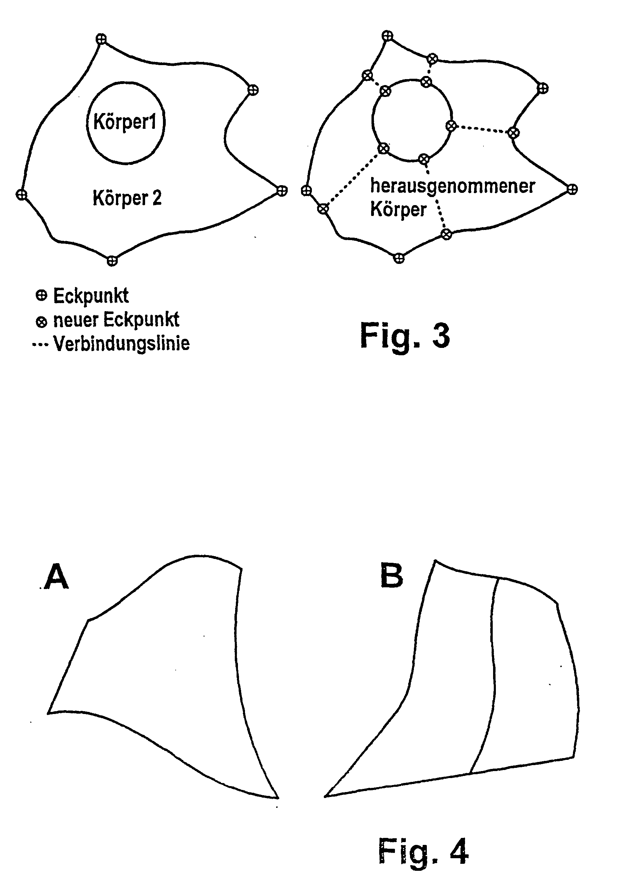

Wird ein Körper vollständig aus einem anderen Körper herausgenommen, werden die Verbindungskurven entweder entwickelt zwischen Scheitelpunkten oder Ecken des Körpers, **Fig. 2,** oder zwischen beiden Umrissen am Punkt mit der minimalen Distanz zu gegenüberliegenden Ecken oder flächen, **Fig. 3.**

Die Erfindung wird im folgenden anhand eines Turbinenrades unter Bezugnahme auf die **Figs. 4 bis 7** näher erläutert:

Die Entwicklung der Geometrie beginnt mit zweidimensionalen Objekten, wendet Rotations- oder Dehnoperatoren an und resultiert in einer realistischen, dreidimensionalen Wiedergabe des Turbinenrades. Grundsätzlich können vierseitige Flächen zur Beschreibung einer zweidimensionalen Wiedergabe der Rotorkomponente verwendet werden. Zwei Methoden werden zur Parametrisierung der Umrisse dieser vierseitigen Flächen verwendet. Das Ziel dieser Parametrisierung ist der Erhalt einer großen Formenvielfalt unter Verwendung von so wenig Parametern wie möglich.

Bei beiden Verfahren werden Referenzpunkte oder Referenzkurven als Eingangsgrößen verwendet. Die Eingangsgrößen werden verwendet als Ausgangs- oder Endgeometrien und/oder zur Positionierung und Orientierung der primitiven Objekte. Diese Eingangsgrößen werden verwendet, um die Genauigkeit zu erhöhen, wenn zwei Objekte entlang einer gemeinsamen Kurve verbunden werden. Die Unterschiede zwischen beiden Verfahren liegen in der Art, wie die Umrisse erstellt werden. Ein Typ von primitiven Objekten entwickelt den Umriß durch direkte Erstellung der Umrißkurve **(Fig. 4A)**. Der zweite Typ erstellt den Umriß durch die Definition eines Skeletts unter Angabe einer Dickeverteilung zur Entwicklung der Umrißkurve **(Fig. 4B)**.

Das merkmalsbasierte Geometriemodell eines Turbinenrades wird angewendet auf eine integral hergestellte Rotorstufe eines Hochdruckverdichters. Die Geometrie hat zunächst einen fiktiven Umriß und ist noch nicht analysiert oder optimiert.

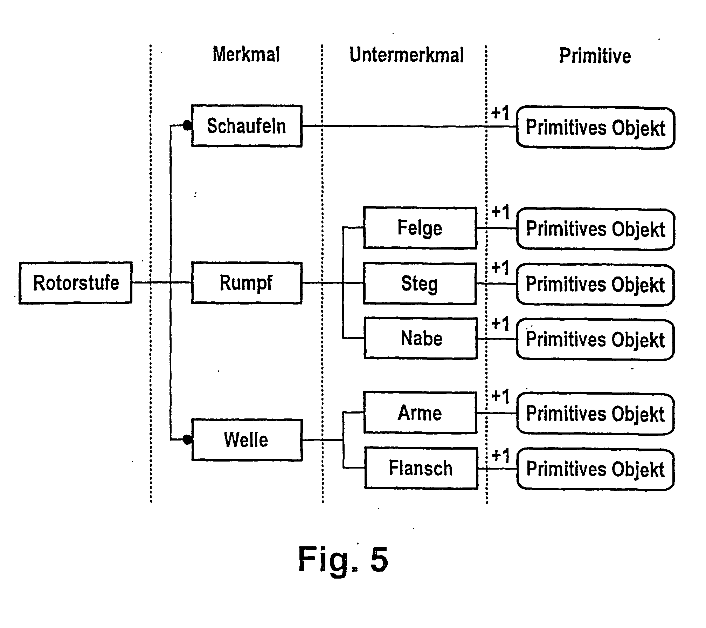

Eine mögliche Zerlegung eines Turbinenrades ist in **Fig. 5** dargestellt. Die ausgefüllten Punkte bedeuten, daß diese Grundobjekte optional sind und Null oder mehr Objekte enthalten können. Die Grundobjekte sind Schaufeln, Rumpf und Welle. Jedes Grundobjekt besteht aus einem oder mehr primitiven Objekten, von denen verschiedene Typen vorhanden sein können, und die ausgetauscht werden können, ohne die Struktur des Aufbaus zu ändern. Z. B. ist der Flansch ein Grundobjekt, das verschiedene Topologien haben kann, wie z.B. ein Flansch zum Schweißen oder zum Zusammenbau. Wenn der Typ dieses Grundobjekts verändert wird, ändert das nicht die Struktur der Rotorscheibe, sondern nur die Topologie.

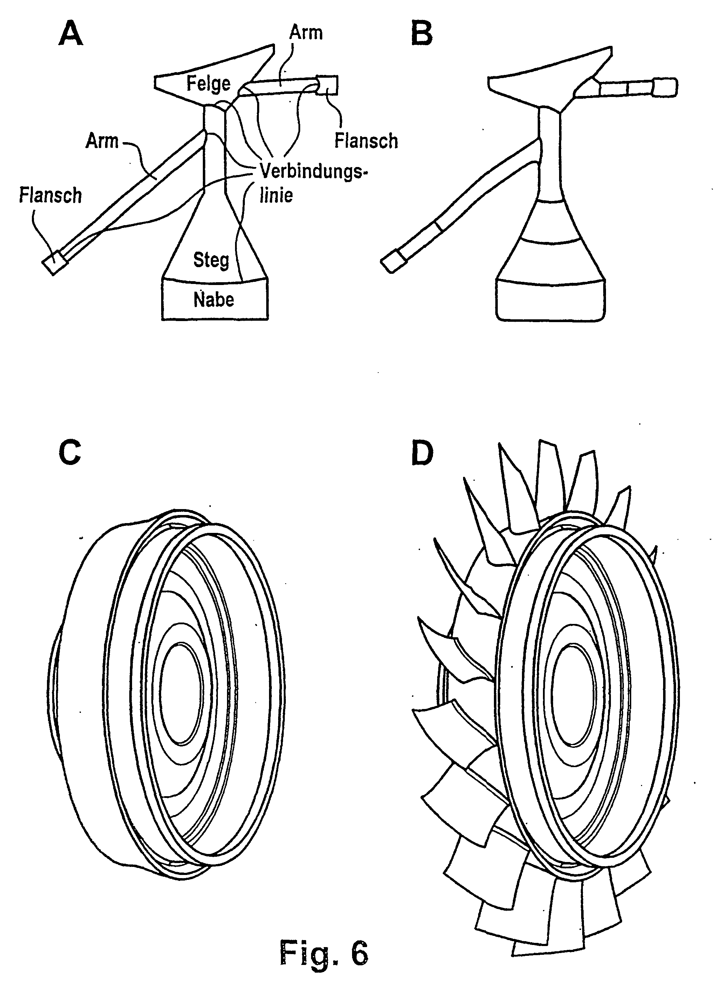

Die Geometrie der Rotorscheibe ist in **Fig.6** in verschiedenen Detaillierungsgraden dargestellt. Die primitiven Objekte sind viereckige Objekte, die verbunden sind, um den abgebildeten Umriß zu erzeugen. Die in **Fig. 4A** dargestellten primitiven Objekte werden eingesetzt für alle Objekte, die den Rumpf und die Flansche darstellen. Die Schaufeln werden unter Verwendung von Typ gemäß **Fig. 4B** erzeugt, wobei die Umrisse beschrieben werden durch ein Skelett mit einer Dickeverteilung.

Im Allgemeinen kann eine Optimierung bei spezifischen Teilen oder mit der vollständigen Geometrie beginnen. Das kann dadurch geschehen, daß nur diejenigen Parametersätze betrachtet werden, die diese Teile beeinflussen, oder durch Betrachtung aller Parameter. Ebenso kann eine Optimierung unter Verwendung der unterschiedlichen Detaillierungs- oder Zusammensetzungsgrade durchgeführt werden. Dieser Grad kann für ein primitives Objekt im Hinblick auf ein spezifisches Teil der Geometrie verändert werden durch Veränderung der Details der primitiven Objekte oder durch Veränderung des Zusammensetzungsgrades des Grundobjekts. Auf jeder Stufe kann eine automatische Rasterung durchgeführt und eine Analyse begonnen werden.

Die Vorteile der Zusammensetzung der Geometrie und Beibehaltung der Hauptcharakteristika der primitiven Objekte durch die Einführung von Verbindungselementen sind, daß ein konsistentes Raster während der Optimierung und der Änderung des Detaillierungs- bzw. Zusammensetzungsgrads aufrechterhalten werden kann.

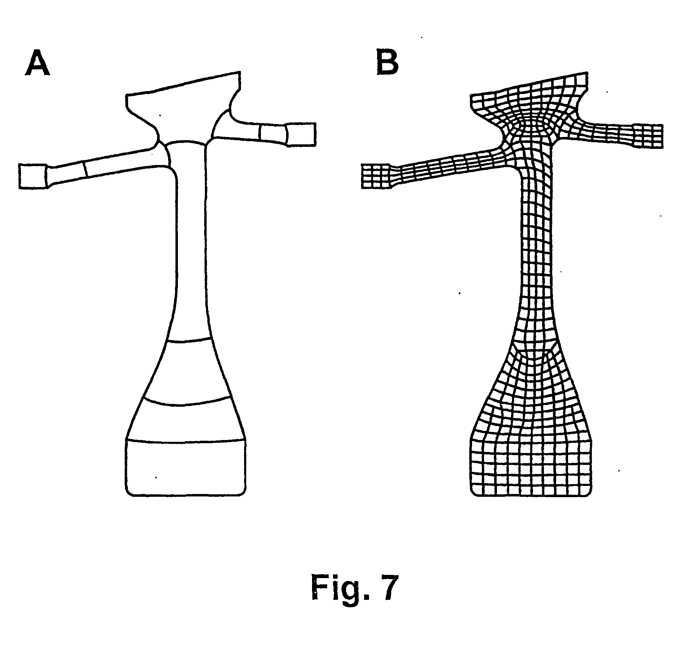

Ein erzeugtes Finite-Elemente-Raster einer Rotorscheibe ist in **Fig. 7** dargestellt. Das Raster bleibt im wesentlichen unverändert, wenn der Detaillierungsgrad oder die Position von primitiven Objekten verändert wird, da diese Änderungen die Hauptstruktur der zusammengesetzten Geometrie nicht beeinflussen. Wenn mehr Objekte hinzugefügt werden und der Zusammensetzungsgrad steigt, wird die vorhergehende Topologie minimal geändert und das vorhergehende Netz kann im wesentlichen unverändert bleiben. Das ist ersichtlich am Übergang zwischen den (Verbindungs-)Armen und dem Rumpf. Die Hauptcharakteristika des Rumpfes werden beibehalten, wenn zwei (Verbindungs-)Arme vorhanden sind bzw. hinzugefügt werden.

## Patentansprüche

1. Verfahren zur Veränderung, insbesondere zur Optimierung, der Konstruktion eines Bauteils unter einem oder mehreren Kriterien anhand eines virtuellen Modells des Bauteils mit folgenden Schritten:
a) Ein virtuelles Modell des Bauteils wird erzeugt durch Kombination des Bauteils aus Grundobjekten mit Boole'schen Operatoren,
b) jedem Grundobjekt wird ein Informationselement zugeordnet, in dem Attribute des Grundobjekts, insbesondere Parameterwerte, Intervallgrenzen und Regeln, abgelegt sind,
c) jedes Grundobjekt wird aus primitiven Objekten aufgebaut, die mit Boole'schen Operatoren kombiniert werden, wobei die primitiven Objekte in Raster zerlegbare Flächen oder Körper sind,
d) jeder geometrischen Berührungsfläche oder -linie, die bei der Boole'schen Operation zwischen zwei oder mehreren Objekten entsteht, wird ein Verbindungselement zugeordnet, in dem Informationen zur Koordinierung der Objekte abgelegt werden,
e) die Rasterung der primitiven Objekte erfolgt durch ein herkömmliches Gitterverfahren,
f) eine Veränderung der geometrischen Gestalt einzelner oder einer Gruppe von Objekten wird vorgenommen, wobei die Informationen der Informationselemente die Grenzen möglicher Veränderungen definieren.

2. Verfahren nach Anspruch 1, **dadurch gekennzeichnet, daß** die Grundobjekte aus einem oder mehreren weiteren Grundobjekten aufgebaut sind, die durch Boole'sche Operatoren kombiniert werden, und denen jeweils ein Informationselement zugeordnet ist, in dem Attribute des Grundobjekts, insbesondere Parameterwerte, Intervallgrenzen und Regeln, abgelegt sind, und wobei jeder geometrischen Berührungsfläche oder -linie, die bei der Boole'schen Operation zwischen zwei oder mehreren Objekten entsteht, ein Verbindungselement zugeordnet wird, in dem Informationen zur Koordinierung der Objekte abgelegt werden.

3. Verfahren nach Anspruch 1 oder 2, **dadurch gekennzeichnet, daß** die primitiven Objekten aus einem oder mehreren weiteren primitiven Objekten aufgebaut sind, die durch Boole'sche Operatoren kombiniert werden, und denen jeweils ein Informationselement zugeordnet ist, in dem Attribute des primitiven Objekts, insbesondere Parameterwerte, Intervallgrenzen und Regeln, abgelegt sind, und wobei jeder geometrischen Berührungsfläche oder -linie, die bei der Boole'schen Operation zwischen zwei oder mehreren Objekten entsteht, ein Verbindungselement zugeordnet wird, in dem Informationen zur Koordinierung der Objekte abgelegt werden.

4. Verfahren nach Anspruch 3, **dadurch gekennzeichnet, daß** die Grundobjekte oder primitiven Objekte mit Boole'schen Operatoren aus niedrigeren geometrischen Objekten zusammengesetzt werden, die durch Rotation, Heften oder Dehnen erstellt werden.

5. Verfahren nach einem der Ansprüche 1 bis 4, **dadurch gekennzeichnet, daß** ausschließlich die geometrische Gestalt einzelner oder mehrerer primitiver Objekte verändert wird.

6. Verfahren nach einem der Ansprüche 1 bis 5, **dadurch gekennzeichnet, daß** die primitiven Objekte standardisierte rasterbare Objekte, wie Dreiecke, Rechtecke, Fünfecke, Tetraeder, Pentaeder oder Hexaeder sind.

7. Verfahren nach einem der Ansprüche 1 bis 6, **dadurch gekennzeichnet, dass** die Grundobjekte insbesondere Flächen, Quader oder rotationssymmetrische Körper sind.

8. Verfahren nach einem der Ansprüche 1 bis 7, **dadurch gekennzeichnet, dass** jedem primitiven Objekt ein Informationselement zugeordnet wird, in dem Attribute des primitiven Objekts, insbesondere Parameterwerte, Intervallgrenzen und Regeln, abgelegt sind.

9. Verfahren nach Anspruch 1, **dadurch gekennzeichnet, dass** vor der Rasterung der primitiven Objekte (Schritt e) den Objekten Koordinierungselemente als zusätzliches Wissen zugewiesen werden.

## Claims

1. A process for modifying, in particular optimising, the design of a structural part in accordance with one or more criteria using a virtual model of the structural part and comprising the following steps:
a) a virtual model of the structural part is generated by combining the structural part from basic objects using Boolean operators,
b) an information element in which are stored attributes of the basic object, in particular parameter values, interval limits and rules, is associated with each basic object;
c) each basic object is constituted of primitive objects which are combined with Boolean operands, said primitive objects being surfaces or solids which can be reduced to a grid pattern;
d) a connecting element in which is stored information for the coordination of the objects is associated with each geometric surface or line of contact created upon the Boolean operation between two or more objects;
e) the grid pattern of the primitive objects is produced by a conventional grid process;
f) a modification of the geometric shape of individual objects or a group of objects is effected, the information contained in the information elements defining the limits to possible modifications.

2. A process in accordance with claim 1,
**characterised in that**
the basic objects are constituted of one or more further basic objects which are combined by Boolean operators and with each of which is associated an information element in which attributes of the basic object, in particular parameter values, interval limits and rules, are stored, a connecting element in which is stored information for the co-ordination of the objects being associated with each geometric surface or line of contact created upon the Boolean operation between two or more objects.

3. A process in accordance with claim 1 or 2,
**characterised in that**
the primitive objects are constituted of one or more further primitive objects which are combined by Boolean operators and with each of which is associated an information element in which are stored attributes of the primitive object, in particular parameter values, interval limits and rules, a connecting element in which is stored information for the co-ordination of the objects being associated with each geometric surface or line of contact created upon the Boolean operation between two or more objects.

4. A process in accordance with claim 3,
**characterised in that**
the basic objects or primitive objects are combined with Boolean operators from lower geometric objects which are created by rotating, pasting or stretching.

5. A process in accordance with one of claims 1 to 4,
**characterised in that**
only the geometric shape of individual primitive objects or groups of primitive objects is modified.

6. A process in accordance with one of claims 1 to 5,
**characterised in that**
the primitive objects are standardised objects which can be transformed into a grid pattern such as triangles, rectangles, pentagons, tetrahedrons, pentahedrons or hexahedrons

7. A process in accordance with one of claims 1 to 6,
**characterised in that**
the basic objects are in particular two-dimensional bodies, three-dimensional bodies or rotation-symmetrical bodies.

8. A process in accordance with one of claims 1 to 7,
**characterised in that**
associated with each primitive object is an information element in which attributes of the primitive object, in particular parameter values, internal limits and rules, are stored.

9. A process in accordance with claim 1,
**characterised in that**
before the primitive objects are transformed into a grid pattern (step e) coordination elements are allocated to the objects as additional knowledge.

## Revendications

1. Procédé de modification, en particulier d'optimisation de la construction d'un composant, sous l'aspect d'un ou plusieurs critères, à l'aide d'un modèle virtuel du composant, comprenant les étapes suivantes :
a) un modèle virtuel du composant est généré par combinaison du composant à partir d'objets de base, en utilisant des opérateurs booléens,
b) à chaque objet de base est associé un élément d'information, dans lequel sont déposés des attributs de l'objet de base, en particulier des valeurs paramètrales, des limites d'intervalle et des règles,
c) chaque objet de base est construit à partir d'objets primitifs, combinés avec des opérateurs booléens, les objet primitifs étant des surfaces ou des corps, décomposables par quadrillage,
d) à chaque face ou ligne de contact géométrique, produite lors de l'opération booléenne entre deux objets ou plus, est associé un élément de liaison, dans lequel sont déposées des informations concernant la coordination des objets,
e) la décomposition par quadrillage des objets primitifs se fait en utilisant un procédé de quadrillage classique,
f) une modification de la forme géométrique d'objets individuels ou d'un groupe d'objets est effectuée, les informations des éléments d'information définissant les limites des éventuelles modifications.

2. Procédé selon la revendication 1, **caractérisé en ce que** les objets de base sont construits à partir d'un ou plusieurs autres objets de base, combinés au moyen d'opérateurs booléens, et à chacun desquels est associé un élément d'information, dans lequel des attributs de l'objet de base, en particulier des valeurs paramétrales, des limites d'intervalle et des règles sont déposés, et où, à chaque face ou ligne de contact géométrique, produite lors de l'opération booléenne entre deux objets ou plus, est associé un élément de liaison, dans lequel sont déposées des informations de coordination des objets.

3. Procédé selon la revendication 1 ou 2, **caractérisé en ce que** les objets primitifs sont construits à partir d'un ou plusieurs autres objets primitifs, combinés par des opérateurs booléens et à chacun desquels est associé un élément d'information, dans lequel sont déposés des attributs de l'objet primitif, en particulier des valeurs paramétrales, des limites d'intervalle et des règles et à chaque face ou ligne de contact géométrique, produite lors de l'opération booléenne, entre deux objets ou plus, est associé un élément de liaison, dans lequel sont déposées des informations concernant la coordination des objets.

4. Procédé selon la revendication 3, **caractérisé en ce que** les objets de base ou les objets primitifs sont composés, avec les opérateurs booléens, d'objets géométriques inférieurs, établis par rotation, attachement ou extension.

5. Procédé selon l'une des revendications 1 à 4, **caractérisé en ce que** la modification effectuée porte exclusivement sur la forme géométrique d'un ou plusieurs objets primitifs.

6. Procédé selon l'une des revendications 1 à 5, **caractérisé en ce que** les objets primitifs sont des objets pouvant être décomposés par quadrillage standardisé, tel que des triangles, des rectangles, des pentagones, des tétraèdres, des pentaèdres ou des hexaèdres.

7. Procédé selon l'une des revendications 1 à 6, **caractérisé en ce que** les objets de base, en particulier des faces, sont des carrés ou des corps répondant à une symétrie de rotation.

8. Procédé selon l'une des revendications 1 à 7, **caractérisé en ce qu'**à chaque objet primitif est associé un élément d'information, dans lequel sont déposés des attributs de l'objet primitif, en particulier des valeurs paramétrales, des limites d'intervalle et des règles.

9. Procédé selon la revendication 1, **caractérisé en ce que**, avant la décomposition par quadrillage des objets primitifs (étape e), on affecte aux objets des éléments de coordination à travers de connaissance supplémentaire.
